# EUROPEAN PATENT APPLICATION

(11) **EP 4 761 518 A1**
(43) Date of publication of application: **17.06.2026**
(21) Application number: 24857431.1
(22) Date of filing: 08.11.2024
(51) Int. Cl.: H10F 19/80, B32B 37/10, B32B 37/06

(54) **ELECTROMAGNETIC HEATING SIX-LAYER THREE-CHAMBER LAMINATOR**

(30) Priority: 31.10.2024 CN 202411534191
(71) Applicant: Qinhuangdao Shengcheng Automation Equipment Co., Ltd., Qinhuangdao, Hebei 066006 (CN)
(72) Inventor: DONG, Weibing, Qinhuangdao, Hebei 066006 (CN); LI, Shuopeng, Qinhuangdao, Hebei 066006 (CN); SHANG, Ju, Qinhuangdao, Hebei 066006 (CN); ZHOU, Mingzhen, Qinhuangdao, Hebei 066006 (CN); WANG, Yanguang, Qinhuangdao, Hebei 066006 (CN); XIN, Yuchen, Qinhuangdao, Hebei 066006 (CN); ZHANG, Cheng, Qinhuangdao, Hebei 066006 (CN); ZHANG, Pengfei, Qinhuangdao, Hebei 066006 (CN); WANG, Yuliang, Qinhuangdao, Hebei 066006 (CN)
(74) Representative: Valet Patent Services Limited
(86) International application number: PCT/CN2024/130988
(87) International publication number: WO 2026/091174

(57) **Abstract**

The present invention discloses an electromagnetic heating six-layer three-chamber laminating machine, comprising a six-layer heating laminating device of a silicone rubber sheet, an airbag contact type six-layer heating laminating device and an airbag contact type six-layer cooling laminating device which are sequentially connected. The present invention has a structure of three chambers which are different. The six-layer heating laminating device of the silicone rubber sheet is used for discharging bubbles in an assembly; the airbag contact type six-layer heating laminating device is used for increasing the bonding crosslinking degree of the assembly; and the airbag contact type six-layer cooling laminating device is used for reducing the temperature of the assembly, so as to improve the processing quality and increase the working efficiency.

## Description

### TECHNICAL FIELD

The present invention relates to the technical field of laminating machines, in particular to an electromagnetic heating six-layer three-chamber laminating machine.

### BACKGROUND

A laminating machine of a solar cell module is one of the necessary important equipment for packaging the solar cell module. In the production process of the solar cell module, the laminating machine needs to laminate an adhesive film, a solar cell, tempered glass and a back film under high-temperature vacuum conditions into a rigid whole.

However, at present, the laminating machine mainly has the following technical problems:
1) Although the existing laminating machine also has a multi-chamber form, multiple chambers have the same structure and the quality of the produced solar cell module needs to be improved;
2) At present, the laminating machine adopts a silicone rubber sheet for laminating operation. For example, a patent with a title of a fully automatic stack multilayer laminating machine and an authorization announcement number of CN224834238B discloses two laminating components (an upper box and a lower box) which are distributed adjacent to each other. A first vacuum chamber and a second vacuum chamber which are isolated up and down through the silicone rubber sheet are formed between the two laminating components when pressed together. On the one hand, the laminating action is conducted through two laminating components (the upper box and the lower box) with the same structure, but there are many components and the structure is complex. On the other hand, the silicone rubber sheet makes downward stretching movement in the process of vacuuming and inflation, which is easy to damage, so frequent replacement, maintenance and substitution are needed, thereby increasing the cost;
3) At present, the working efficiency of the laminating machine is low, and more devices are required under the same production capacity;
4) At present, the laminating machine covers large area, and the output of finished products per unit area is less.

Therefore, the problem to be solved by those skilled in the art is to provide an electromagnetic heating six-layer three-chamber laminating machine with high efficiency and high quality.

### SUMMARY

In view of this, the present invention provides an electromagnetic heating six-layer three-chamber laminating machine to solve at least one of the technical problems mentioned in the background above.

To achieve the above purpose, the present invention adopts the following technical solution:
An electromagnetic heating six-layer three-chamber laminating machine comprises a six-layer heating laminating device of a silicone rubber sheet, an airbag contact type six-layer heating laminating device and an airbag contact type six-layer cooling laminating device which are sequentially connected.

By adopting the above technical solution, the present invention has the following beneficial effects:
The present invention has a structure of three chambers which are different. The six-layer heating laminating device of the silicone rubber sheet is used for discharging bubbles in an assembly; the airbag contact type six-layer heating laminating device is used for increasing the bonding crosslinking degree of the assembly; and the airbag contact type six-layer cooling laminating device is used for reducing the temperature of the assembly, so as to improve the processing quality and increase the working efficiency.

Further, the airbag contact type six-layer heating laminating device comprises a rack, five airbag type heating pressing devices, a lower electromagnetic heating plate, a limit lifting mechanism, a vacuuming and inflating system and six conveying assemblies; the five airbag type heating pressing devices and the lower electromagnetic heating plate successively distributed from top to bottom are installed in the rack through the limit lifting mechanism, so as to form a vacuum laminating chamber when two adjacent airbag type heating pressing devices are pressed together and the lower electromagnetic heating plate is pressed against the airbag type heating pressing devices; the vacuuming and inflating system is connected and communicated with the five airbag type heating pressing devices respectively; the six conveying assemblies are enclosed and installed on the five airbag type heating pressing devices and the lower electromagnetic heating plate respectively to form a conveying channel between the two adjacent airbag type heating pressing devices and between the airbag type heating pressing devices and the lower electromagnetic heating plate.

Beneficial effects produced by adopting the above further technical solution are: the limit lifting mechanism drives the lower electromagnetic heating plate and the airbag type heating pressing devices to rise and fall in sequence, and the vacuum laminating chamber is formed when the lower electromagnetic heating plate is pressed against the airbag type heating pressing devices and the adjacent airbag type heating pressing devices are pressed together. That is, one vacuum laminating chamber is used to achieve the lamination of the solar cell modules, thereby eliminating the upper box structure and the silicone rubber sheet, simplifying the structure, avoiding frequent replacement and maintenance of the silicone rubber sheet, saving the cost and increasing the working efficiency.

Further, each airbag type heating pressing device comprises a side frame, upper electromagnetic heating plates, a plurality of airbags, an aluminum plate and a silicone rubber pad; the side frame is installed in the rack through the limit lifting mechanism; the upper electromagnetic heating plates are located at a top of the side frame and connected by fastening assemblies; when a bottom end of the side frame is pressed against the lower electromagnetic heating plate and when the bottom end of the side frame is pressed against the upper electromagnetic heating plate at a lower layer, the vacuum laminating chamber is formed inside; tops of the plurality of airbags are fixedly connected with the upper electromagnetic heating plates and evenly distributed, and the vacuuming and inflating system is connected and communicated with the plurality of airbags and the vacuum laminating chamber respectively; the aluminum plate is installed at bottom ends of the plurality of airbags; and the silicone rubber pads are laid at a bottom of the aluminum plate.

Beneficial effects produced by adopting the above further technical solution are: when the bottom end of the side frame is pressed against the lower electromagnetic heating plate and when the bottom end of the side frame is pressed against the upper electromagnetic heating plate located at the lower layer, the lower electromagnetic heating plate and a plurality of upper electromagnetic heating plates begin to heat; and then when the vacuuming and inflating system begins to inflate the interior of the airbags, compressed air puts pressure on the airbags to force the airbags to drive the aluminum plate and the silicone rubber pad to move downward until attached to the solar cell modules for lamination operation.

Further, each conveying assembly comprises an input end power drum group, an output end power drum group, a chain transmission mechanism, high-temperature cloth pull rods and high-temperature cloths; the input end power drum group and the output end power drum group are installed on an input side and an output side of the rack respectively, and are in transmission connection through the chain transmission mechanism; the high-temperature cloth pull rods are fixed on the chain transmission mechanism; and the six high-temperature cloths are fixed on the six high-temperature cloth pull rods respectively and are enclosed on the five airbag type heating pressing devices and the lower electromagnetic heating plate.

Further, the limit lifting mechanism comprises a limit plate, a plurality of limit blocks, a hydraulic cylinder, a lifting transition plate and a plurality of guide rollers, and the limit plate has a right angle surface and an inclined surface; the limit plate is fixed on a side surface of the rack and is located on side surfaces of the five airbag type heating pressing devices and the lower electromagnetic heating plate; the plurality of limit blocks are fixed on the side surfaces of the five airbag type heating pressing devices and the lower electromagnetic heating plate respectively, and a bevel of each limit block is matched with the contacted or separated inclined surface; the hydraulic cylinder is vertically fixed below the lower electromagnetic heating plate; the lifting transition plate is fixed on a telescopic rod of the hydraulic cylinder, and corresponds to the lower electromagnetic heating plate above; the plurality of guide rollers are fixed on the side surfaces of the five airbag type heating pressing devices and the lower electromagnetic heating plate respectively; and each of the guide rollers is embedded in a chute provided on the right angle surface.

Beneficial effects produced by adopting the above further technical solution are: in an operating state, the hydraulic cylinder lifts the lifting transition plate; the lifting transition plate lifts the lower electromagnetic heating plate; the lower electromagnetic heating plate lifts the airbag type heating pressing device at the bottom layer, then lifts the airbag type heating pressing device at a sub-bottom layer, and lifts each layer gradually; finally the lower electromagnetic heating plate and the airbag type heating pressing device at the bottom layer are pressed together; and simultaneously, the two adjacent upper and lower airbag type heating pressing devices are pressed together. In this process, the guide rollers on the lower electromagnetic heating plate and the airbag type heating pressing device at each layer slide along a slide rail of the right angle surface of the limit plate, so as to ensure that the lower electromagnetic heating plate and the five airbag type heating pressing devices rise along a vertical direction. When the solar cell module between the lower electromagnetic heating plate and the airbag type heating pressing device at the bottom layer and the solar cell module between the two adjacent airbag type heating pressing devices are required to be removed, the telescopic rod of the hydraulic cylinder shrinks, and the lifting transition plate is withdrawn to the top of a supporting frame; the lower electromagnetic heating plate and the five airbag type heating pressing devices fall vertically from bottom to top successively until each limit block is hindered by the inclined surface of the limit plate. At this moment, the lower electromagnetic heating plate and the five airbag type heating pressing devices are maintained in the corresponding positions. The lower electromagnetic heating plate and the airbag type heating pressing device at the bottom layer are open, and the two adjacent airbag type heating pressing devices are open. Pressing or opening is realized between the lower electromagnetic heating plate and the airbag type heating pressing devices and between the adjacent airbag type heating pressing devices. The structural design is ingenious, the production cost is reduced, and the process is stable and reliable.

Further, the difference between the airbag contact type six-layer cooling laminating device and the airbag contact type six-layer heating laminating device is that the upper electromagnetic heating plates and the lower electromagnetic heating plate are replaced with water cooling plates.

Further, the six-layer heating laminating device of the silicone rubber sheet and the airbag contact type six-layer heating laminating device are connected by a transition transmission device, and the airbag contact type six-layer cooling laminating device and the airbag contact type six-layer heating laminating device are connected by the transition transmission device.

Beneficial effects produced by adopting the above further technical solution are: the tightness between the devices is improved and the continuity of transmission is ensured.

Further, the electromagnetic heating six-layer three-chamber laminating machine further comprises a six-layer feeding device and a six-layer finished product conveying device; the six-layer feeding device, the six-layer heating laminating device of the silicone rubber sheet, the airbag contact type six-layer heating laminating device, the airbag contact type six-layer cooling laminating device and the six-layer finished product conveying device are connected successively.

Beneficial effects produced by adopting the above further technical solution are: the feeding, laminating and discharging functions are integrated; the production process is continuous, and the labor force can be reduced; the feeding device, the laminating device and the finished product conveying device are all multilayer structures; and the multilayer solar cell modules can be supplied, pressed, packaged and outputted at the same time, thereby reducing the occupied area and greatly increasing the production efficiency.

Further, an input end of the six-layer feeding device and an output end of the six-layer finished product conveying device are provided with lifting conveying devices.

Beneficial effects produced by adopting the above further technical solution are: automatic layered feeding or discharging is realized, and the working efficiency is increased.

### DESCRIPTION OF DRAWINGS

To more clearly describe the technical solutions in the embodiments of the present invention or in the prior art, the drawings required to be used in the description of the embodiments or the prior art will be simply presented below. Apparently, the drawings in the following description are merely the embodiments of the present invention, and for those ordinary skilled in the art, other drawings can also be obtained according to the provided drawings without contributing creative labor.
Fig. 1 is an overall structural schematic diagram of an electromagnetic heating six-layer three-chamber laminating machine provided by the present invention;
Fig. 2 is a three-dimensional structural schematic diagram of a six-layer heating laminating device of a silicone rubber sheet, an airbag contact type six-layer heating laminating device and an airbag contact type six-layer cooling laminating device provided by the present invention;
Fig. 3 is a three-dimensional structural schematic diagram of an airbag contact type six-layer heating laminating device provided by the present invention;
Fig. 4 is a three-dimensional structural schematic diagram of two adjacent airbag type heating pressing devices provided by the present invention;
Fig. 5 is a main view of coordination of two adjacent airbag type heating pressing devices provided by the present invention;
Fig. 6 is a three-dimensional structural schematic diagram of coordination of an airbag type heating pressing device and a lower electromagnetic heating plate provided by the present invention;
Fig. 7 is an exploded diagram of an airbag type heating pressing device provided by the present invention.

### DETAILED DESCRIPTION

The technical solutions in the embodiments of the present invention will be clearly and fully described below in combination with the drawings in the embodiments of the present invention. Apparently, the described embodiments are merely part of the embodiments of the present invention, not all of the embodiments. Based on the embodiments in the present invention, all other embodiments obtained by those ordinary skilled in the art without contributing creative labor will belong to the protection scope of the present invention.

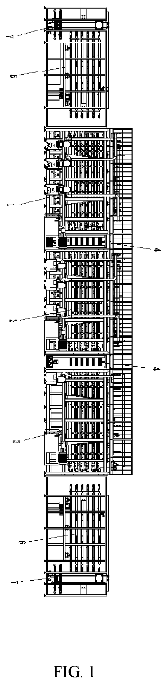

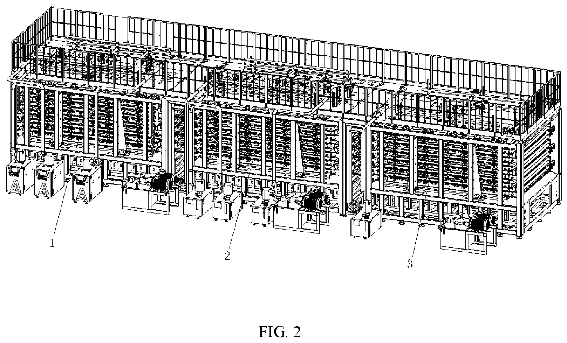

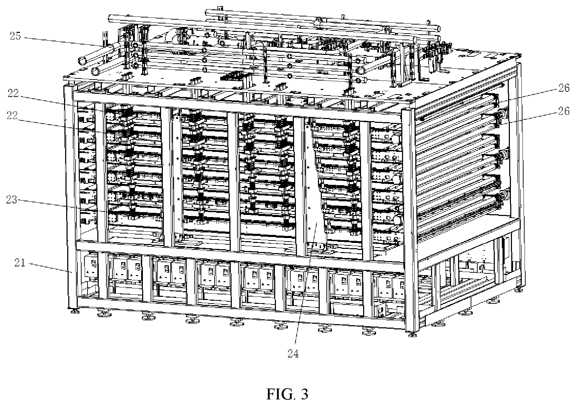

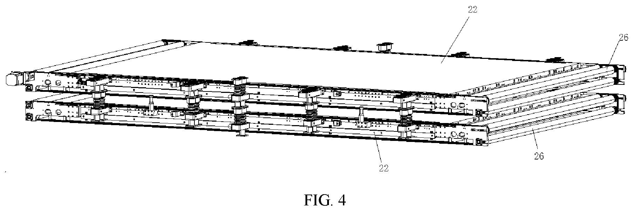

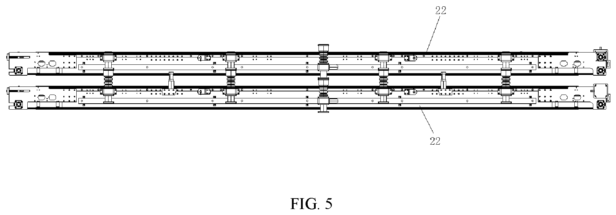

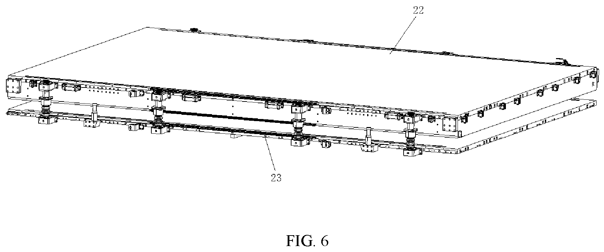

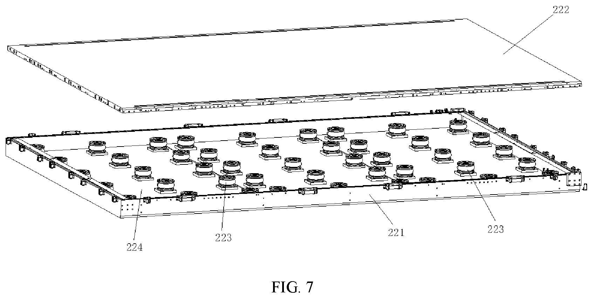

As shown in Figs. 1-7, embodiments of the present invention disclose an electromagnetic heating six-layer three-chamber laminating machine which comprises a six-layer heating laminating device 1 of a silicone rubber sheet, an airbag contact type six-layer heating laminating device 2 and an airbag contact type six-layer cooling laminating device 3 which are sequentially connected. The present invention has a structure of three chambers which are different. The six-layer heating laminating device 1 of the silicone rubber sheet is used for discharging bubbles in an assembly; the airbag contact type six-layer heating laminating device 2 is used for increasing the bonding crosslinking degree of the assembly; and the airbag contact type six-layer cooling laminating device 3 is used for reducing the temperature of the assembly, so as to improve the processing quality and increase the working efficiency.

Specifically, the airbag contact type six-layer heating laminating device 2 comprises a rack 21, five airbag type heating pressing devices 22, a lower electromagnetic heating plate 23, a limit lifting mechanism 24, a vacuuming and inflating system 25 and six conveying assemblies 26. The five airbag type heating pressing devices 22 and the lower electromagnetic heating plate 23 successively distributed from top to bottom are installed in the rack 21 through the limit lifting mechanism 24, so as to form a vacuum laminating chamber when two adjacent airbag type heating pressing devices 22 are pressed together and the lower electromagnetic heating plate 23 is pressed against the airbag type heating pressing devices 22; the vacuuming and inflating system 25 is connected and communicated with the five airbag type heating pressing devices 22 respectively; the six conveying assemblies 26 are enclosed and installed on the five airbag type heating pressing devices 22 and the lower electromagnetic heating plate 23 respectively to form a conveying channel between the two adjacent airbag type heating pressing devices 22 and between the airbag type heating pressing devices 22 and the lower electromagnetic heating plate 23. During operation, the limit lifting mechanism 24 drives the lower electromagnetic heating plate 23 and the airbag type heating pressing devices 22 to rise and fall in sequence, and the vacuum laminating chamber is formed when the lower electromagnetic heating plate 23 is pressed against the airbag type heating pressing devices 22 and the adjacent airbag type heating pressing devices 22 are pressed together. That is, one vacuum laminating chamber is used to achieve the lamination of the solar cell modules, thereby eliminating the upper box structure and the silicone rubber sheet, simplifying the structure, avoiding frequent replacement and maintenance of the silicone rubber sheet, saving the cost and increasing the working efficiency.

Specifically, each airbag type heating pressing device 22 comprises a side frame 221, upper electromagnetic heating plates 222, a plurality of airbags 223, an aluminum plate 224 and a silicone rubber pad; the side frame 221 is installed in the rack 21 through the limit lifting mechanism 24; and the upper electromagnetic heating plates 222 are located at a top of the side frame 221 and connected by fastening assemblies. When a bottom end of the side frame 221 is pressed against the lower electromagnetic heating plate 23 and when the bottom end of the side frame 221 is pressed against the upper electromagnetic heating plate 222 at a lower layer, the vacuum laminating chamber is formed inside; tops of the plurality of airbags 223 are fixedly connected with the upper electromagnetic heating plates 222 and evenly distributed, and the vacuuming and inflating system 25 is connected and communicated with the plurality of airbags 223 and the vacuum laminating chamber respectively, wherein the structure of the vacuuming and inflating system 25 is the same as a gas pressurization system disclosed by the patent with a notification number of CN224834238B and a title of a fully automatic stack multilayer laminating machine. The differences are that a first fixing flange is connected and communicated with the side frame 221, and thus is directly connected and communicated with the vacuum laminating chamber, and a second fixing flange is communicated with a vacuum flow channel of the upper electromagnetic heating plate 222, and the vacuum flow channel of the upper electromagnetic heating plate 222 is connected and communicated with the airbag 223, which will not be repeated. The aluminum plate 224 is installed at bottom ends of the plurality of airbags 223; and the silicone rubber pads are laid at a bottom of the aluminum plate 224. During operation, when the bottom end of the side frame 221 is pressed against the lower electromagnetic heating plate 23 and when the bottom end of the side frame 221 is pressed against the upper electromagnetic heating plate 222 located at the lower layer, the lower electromagnetic heating plate 23 and a plurality of upper electromagnetic heating plates 222 begin to heat; and then when the vacuuming and inflating system 25 begins to inflate the interior of the airbags 223, compressed air puts pressure on the airbags 223 to force the airbags to drive the aluminum plate 224 and the silicone rubber pad to move downward until attached to the solar cell modules for lamination operation.

Specifically, each conveying assembly 26 comprises an input end power drum group, an output end power drum group, a chain transmission mechanism, high-temperature cloth pull rods and high-temperature cloths; the input end power drum group and the output end power drum group are installed on an input side and an output side of the rack 21 respectively, and are in transmission connection through the chain transmission mechanism; the high-temperature cloth pull rods are fixed on the chain transmission mechanism; and the six high-temperature cloths are fixed on the six high-temperature cloth pull rods respectively and are enclosed on the five airbag type heating pressing devices 22 and the lower electromagnetic heating plate 23.

Specifically, the structure of the limit lifting mechanism 24 is the same as the gas pressurization system disclosed by the patent with a notification number of CN224834238B and a title of a fully automatic stack multilayer laminating machine, including a limit plate, a plurality of limit blocks, a hydraulic cylinder, a lifting transition plate and a plurality of guide rollers. The limit plate has a right angle surface and an inclined surface; the limit plate is fixed on a side surface of the rack 21 and is located on side surfaces of the five airbag type heating pressing devices 22 and the lower electromagnetic heating plate 23; the plurality of limit blocks are fixed on the side surfaces of the five airbag type heating pressing devices 22 and the lower electromagnetic heating plate 23 respectively, and a bevel of each limit block is matched with the contacted or separated inclined surface; the hydraulic cylinder is vertically fixed below the lower electromagnetic heating plate 23; the lifting transition plate is fixed on a telescopic rod of the hydraulic cylinder, and corresponds to the lower electromagnetic heating plate 23 above; the plurality of guide rollers are fixed on the side surfaces of the five airbag type heating pressing devices 22 and the lower electromagnetic heating plate 23 respectively; and each of the guide rollers is embedded in a chute provided on the right angle surface. In an operating state, the hydraulic cylinder lifts the lifting transition plate; the lifting transition plate lifts the lower electromagnetic heating plate 23; the lower electromagnetic heating plate 23 lifts the airbag type heating pressing device 22 at the bottom layer, then lifts the airbag type heating pressing device 22 at a sub-bottom layer, and lifts each layer gradually; finally the lower electromagnetic heating plate 23 and the airbag type heating pressing device 22 at the bottom layer are pressed together; and simultaneously, the two adjacent upper and lower airbag type heating pressing devices 22 are pressed together. In this process, the guide rollers on the lower electromagnetic heating plate 23 and the airbag type heating pressing device 22 at each layer slide along a slide rail of the right angle surface of the limit plate, so as to ensure that the lower electromagnetic heating plate 23 and the five airbag type heating pressing devices 22 rise along a vertical direction. When the solar cell module between the lower electromagnetic heating plate 23 and the airbag type heating pressing device 22 at the bottom layer and the solar cell module between the two adjacent airbag type heating pressing devices 22 are required to be removed, the telescopic rod of the hydraulic cylinder shrinks, and the lifting transition plate is withdrawn to the top of a supporting frame; the lower electromagnetic heating plate 23 and the five airbag type heating pressing devices 22 fall vertically from bottom to top successively until each limit block is hindered by the inclined surface of the limit plate. At this moment, the lower electromagnetic heating plate 23 and the five airbag type heating pressing devices 22 are maintained in the corresponding positions. The lower electromagnetic heating plate 23 and the airbag type heating pressing device 22 at the bottom layer are open, and the two adjacent airbag type heating pressing devices 22 are open. Pressing or opening is realized between the lower electromagnetic heating plate 23 and the airbag type heating pressing devices 22 and between the adjacent airbag type heating pressing devices 22. The structural design is ingenious, the production cost is reduced, and the process is stable and reliable.

Specifically, the difference between the airbag contact type six-layer cooling laminating device 3 and the airbag contact type six-layer heating laminating device 2 is that the upper electromagnetic heating plates 222 and the lower electromagnetic heating plate 23 are replaced with water cooling plates.

Specifically, the structure of the six-layer heating laminating device 1 of the silicone rubber sheet is the same as a multilayer laminating device disclosed by the patent with a notification number of CN224834238B and a title of a fully automatic stack multilayer laminating machine, which will not be repeated.

To further optimize the technical solution of the present invention, the six-layer heating laminating device 1 of the silicone rubber sheet and the airbag contact type six-layer heating laminating device 2 are connected by a transition transmission device 4, and the airbag contact type six-layer cooling laminating device 3 and the airbag contact type six-layer heating laminating device 2 are connected by the transition transmission device 4 to improve the tightness between the devices and ensure the continuity of transmission.

Specifically, the transition transmission device 4 comprises a supporting frame and a plurality of conveying roller sets, and the supporting frame is placed between two adjacent laminating devices; and the plurality of conveying roller sets are installed on the supporting frame and successively distributed at equal intervals from top to bottom.

To further optimize the technical solution of the present invention, the electromagnetic heating six-layer three-chamber laminating machine further comprises a six-layer feeding device 5 and a six-layer finished product conveying device 6; the six-layer feeding device 5, the six-layer heating laminating device 1 of the silicone rubber sheet, the airbag contact type six-layer heating laminating device 2, the airbag contact type six-layer cooling laminating device 3 and the six-layer finished product conveying device 6 are connected successively. The present invention integrates the feeding, laminating and discharging functions; the production process is continuous, and the labor force can be reduced; the feeding device, the laminating device and the finished product conveying device are all multilayer structures; and the multilayer solar cell modules can be supplied, pressed, packaged and outputted at the same time, thereby reducing the occupied area and greatly increasing the production efficiency.

To further optimize the technical solution of the present invention, an input end of the six-layer feeding device 5 and an output end of the six-layer finished product conveying device 6 are provided with lifting conveying devices 7, so as to realize automatic layered feeding or discharging and increase the working efficiency.

Specifically, each lifting conveying device 7 comprises a lifting machine, two lifting frames and two belt conveyor bodies; the two lifting frames are installed on the lifting machine and the two lifting frames are distributed vertically in parallel; and the two belt conveyor bodies are installed on tops of the two lifting frames respectively.

Each embodiment in the description is described in a progressive way. The difference of each embodiment from each other is the focus of explanation. The same and similar parts among all of the embodiments can be referred to each other. For a device disclosed by the embodiments, because the device corresponds to a method disclosed by the embodiments, the device is simply described. Refer to the description of the method part for the related part.

The above description of the disclosed embodiments enables those skilled in the art to realize or use the present invention. Many modifications to these embodiments will be apparent to those skilled in the art. The general principle defined herein can be realized in other embodiments without departing from the spirit or scope of the present invention. Therefore, the present invention will not be limited to these embodiments shown herein, but will conform to the widest scope consistent with the principle and novel features disclosed herein.

## Claims

1. An electromagnetic heating six-layer three-chamber laminating machine, comprising a six-layer heating laminating device of a silicone rubber sheet, an airbag contact type six-layer heating laminating device and an airbag contact type six-layer cooling laminating device which are sequentially connected.

2. The electromagnetic heating six-layer three-chamber laminating machine according to claim 1, wherein the airbag contact type six-layer heating laminating device comprises a rack, five airbag type heating pressing devices, a lower electromagnetic heating plate, a limit lifting mechanism, a vacuuming and inflating system and six conveying assemblies; the five airbag type heating pressing devices and the lower electromagnetic heating plate successively distributed from top to bottom are installed in the rack through the limit lifting mechanism, so as to form a vacuum laminating chamber when two adjacent airbag type heating pressing devices are pressed together and the lower electromagnetic heating plate is pressed against the airbag type heating pressing devices; the vacuuming and inflating system is connected and communicated with the five airbag type heating pressing devices respectively; the six conveying assemblies are enclosed and installed on the five airbag type heating pressing devices and the lower electromagnetic heating plate respectively to form a conveying channel between the two adjacent airbag type heating pressing devices and between the airbag type heating pressing devices and the lower electromagnetic heating plate.

3. The electromagnetic heating six-layer three-chamber laminating machine according to claim 2, wherein each airbag type heating pressing device comprises a side frame, upper electromagnetic heating plates, a plurality of airbags, an aluminum plate and a silicone rubber pad; the side frame is installed in the rack through the limit lifting mechanism; the upper electromagnetic heating plates are located at a top of the side frame and connected by fastening assemblies; when a bottom end of the side frame is pressed against the lower electromagnetic heating plate and when the bottom end of the side frame is pressed against the upper electromagnetic heating plate at a lower layer, the vacuum laminating chamber is formed inside; tops of the plurality of airbags are fixedly connected with the upper electromagnetic heating plates and evenly distributed, and the vacuuming and inflating system is connected and communicated with the plurality of airbags and the vacuum laminating chamber respectively; the aluminum plate is installed at bottom ends of the plurality of airbags; and the silicone rubber pads are laid at a bottom of the aluminum plate.

4. The electromagnetic heating six-layer three-chamber laminating machine according to claim 2, wherein each conveying assembly comprises an input end power drum group, an output end power drum group, a chain transmission mechanism, high-temperature cloth pull rods and high-temperature cloths; the input end power drum group and the output end power drum group are installed on an input side and an output side of the rack respectively, and are in transmission connection through the chain transmission mechanism; the high-temperature cloth pull rods are fixed on the chain transmission mechanism; and the six high-temperature cloths are fixed on the six high-temperature cloth pull rods respectively and are enclosed on the five airbag type heating pressing devices and the lower electromagnetic heating plate.

5. The electromagnetic heating six-layer three-chamber laminating machine according to claim 3, wherein the limit lifting mechanism comprises a limit plate, a plurality of limit blocks, a hydraulic cylinder, a lifting transition plate and a plurality of guide rollers, and the limit plate has a right angle surface and an inclined surface; the limit plate is fixed on a side surface of the rack and is located on side surfaces of the five airbag type heating pressing devices and the lower electromagnetic heating plate; the plurality of limit blocks are fixed on the side surfaces of the five airbag type heating pressing devices and the lower electromagnetic heating plate respectively, and a bevel of each limit block is matched with the contacted or separated inclined surface; the hydraulic cylinder is vertically fixed below the lower electromagnetic heating plate; the lifting transition plate is fixed on a telescopic rod of the hydraulic cylinder, and corresponds to the lower electromagnetic heating plate above; the plurality of guide rollers are fixed on the side surfaces of the five airbag type heating pressing devices and the lower electromagnetic heating plate respectively; and each of the guide rollers is embedded in a chute provided on the right angle surface.

6. The electromagnetic heating six-layer three-chamber laminating machine according to any one of claims 2-5, wherein a difference between the airbag contact type six-layer cooling laminating device and the airbag contact type six-layer heating laminating device is that: the upper electromagnetic heating plates and the lower electromagnetic heating plate are replaced with water cooling plates.

7. The electromagnetic heating six-layer three-chamber laminating machine according to claim 1, wherein the six-layer heating laminating device of the silicone rubber sheet and the airbag contact type six-layer heating laminating device are connected by a transition transmission device, and the airbag contact type six-layer cooling laminating device and the airbag contact type six-layer heating laminating device are connected by the transition transmission device.

8. The electromagnetic heating six-layer three-chamber laminating machine according to claim 6, further comprising a six-layer feeding device and a six-layer finished product conveying device, wherein the six-layer feeding device, the six-layer heating laminating device of the silicone rubber sheet, the airbag contact type six-layer heating laminating device, the airbag contact type six-layer cooling laminating device and the six-layer finished product conveying device are connected successively.

9. The electromagnetic heating six-layer three-chamber laminating machine according to claim 8, wherein an input end of the six-layer feeding device and an output end of the six-layer finished product conveying device are provided with lifting conveying devices.
